# EUROPÄISCHE PATENTSCHRIFT

(11) **EP 2 605 385 B1**
(45) Veröffentlichungstag und Bekanntmachung des Hinweises auf die Patenterteilung: **26.01.2022**
(21) Anmeldenummer: 12196687.3
(22) Anmeldetag: 12.12.2012
(51) Int. Cl.: H02K 15/095, H02K 3/34, H02K 15/10

(54) **Verfahren zum Wickeln der Feldspulen eines Stators sowie Stator**
Method for winding the magnetic coils of a stator and stator
Procédé d'enroulement de bobines de champs d'un stator ainsi que le stator

(30) Priorität: 14.12.2011 DE 102011088536; 17.09.2012 DE 102012216573
(43) Veröffentlichungstag der Anmeldung: 19.06.2013
(73) Patentinhaber: Metabowerke GmbH, 72622 Nürtingen (DE)
(72) Erfinder: Schmohl, Michael, 72119 Ammerbuch (DE); Falter, Norbert, 72622 Neckarhausen (DE)
(74) Vertreter: Markfort, Iris-Anne Lucie

(56) Entgegenhaltungen:
- WO-A1-2008/072443
- GB-A- 912 993
- GB-A- 2 430 085
- JP-A- 2001 238 378
- US-A- 3 130 335
- US-B1- 6 357 689

## Beschreibung

Die vorliegende Erfindung betrifft ein Verfahren zum Einlegen von Draht in Form von wenigstens einer Spule in einen Spulenraum eines Stators sowie einen Stator eines elektrischen Antriebs und eine Vorrichtung zur Herstellung eines solchen Stators.

Statoren werden in elektrischen Antrieben bzw. Elektromotoren eingesetzt, die neben dem Stator auch einen hierzu relativ bewegbaren Rotor umfassen. Eine übliche Anwendung solcher elektrischer Antriebe findet sich bei Haushaltsgeräten und Elektrowerkzeugmaschinen.

Ein Stator mit einem entsprechenden Rotor weist in der Regel einen Statorkörper mit einer geschlossenen Statorwand und paarweise daran angeordnete Polhörner bzw. Polspitzen auf. So sind an einem zweipoligen Stator beispielsweise vier Polhörner vorgesehen, die zu der Innenwand des Statorkörpers beabstandet an dieser angeordnet sind. Innerhalb dieser Polhörner ist der Rotor des elektrischen Antriebs angeordnet, welcher sich um eine Drehachse innerhalb des Stators relativ zu diesem rotatorisch bewegt. Der Statorkörper, welcher, wie der Rotor, üblicherweise aus eisenhaltigen Werkstoff (Eisen) hergestellt ist, weist einen Spulenraum auf, der eine Anzahl von Spulennuten, beispielsweise vier, sechs oder acht Spulennuten, umfasst, die von den jeweiligen Polhörnern und der Statorwand begrenzt werden. In diese Spulennuten wird üblicherweise ein aus Kupfer bestehender Draht bzw. werden aus einem solchen gefertigte Feldspulen eingelegt.

Aufgrund des Aufbaus des Elektromotors wird der maximale Außendurchmesser des Rotors im Wesentlichen durch den Abstand der Polhörner voneinander bestimmt, während der Außendurchmesser des Stators die Baugröße des Elektromotors vorgibt.

Bei Elektrowerkzeugmaschinen, bei denen der Elektromotor in einem Gehäuseteil im Griffbereich des Anwenders angeordnet ist, wie zum Beispiel bei Winkelschleifern, Geradschleifern oder Polierern, kommt dem Durchmesser des Elektromotors eine besondere Bedeutung zu, da er einen direkten Einfluss auf den Griffdurchmesser und damit auf den Umfang des Griffteils hat. Gerade bei solchen Elektrowerkzeugmaschinen sollte der Umfang des Gehäuseteils, das den Handgriff bildet (das sogenannte Fadenmaß), für eine möglichst komfortable Handhabung der Elektrowerkzeugmaschine ein gewisses Maß nicht überschreiten. Aus diesem Grund ist es seit langem eine Aufgabe im Zusammenhang mit derartigen Elektrowerkzeugmaschinen, das Fadenmaß zu reduzieren. Gleichzeitig beeinflusst jedoch der maximale Außendurchmesser des Rotors maßgeblich die Leistung des Elektromotors, da dieser dem maximalen Hebelarm des Rotors entspricht und somit die Größe des abgegebenen Drehmoments des Elektromotors mitbestimmt.

Eine entscheidende Anforderung, die seit Jahren an den elektrischen Antrieb von beispielsweise Elektrowerkzeugmaschinen gestellt wird, besteht darin, zunehmend höhere Leistungen bei gleichbleibender Gerätegröße oder bei einer gleichzeitigen Reduktion der Gerätegröße zu bieten.

Elektrische Antriebe mit einem Stator sowie einem darin angeordneten Rotor sind in der Regel luftgekühlt, wobei Umgebungsluft in den elektrischen Antrieb eingesaugt und durch diesen hindurch gezogen wird. Die durch den elektrischen Antrieb hindurchströmende Luft führt die Wärme von dem Kupferdraht der Feldspule(n) ab und stellt dabei sicher, dass der elektrische Antrieb ausreichend Leistung abgeben kann ohne zu überhitzen.

Als Nachteil in Zusammenhang mit der Luftkühlung elektrischer Antriebe hat sich in der Praxis gezeigt, dass in der Kühlungsluft oftmals Staubpartikel enthalten sind, die an dem Spulendraht angreifen und im Betrieb der elektrischen Antriebs zu einer Abrasion des Spulendrahts führen können.

Weiterhin ist gemäß der Norm DIN EN 60745 ein elektrischer Sicherheitsabstand zwischen einem aktiven Teil Eisen und einem Spulendraht von mindestens 2 mm gefordert. Daher ist es notwendig, bei jedem Elektromotor zu gewährleisten, dass die Luftstrecke zwischen dem Spulendraht sowohl zum Stator als auch zum darin aufgenommenen Rotor wenigstens 2 mm beträgt.

Um den Anforderungen eines ausreichenden Schutzes vor Abrasion und einer elektrischen Isolation des Spulendrahtes zu begegnen ist es aus der Praxis bekannt, handeingelegte, vorgewickelte Spulen vor dem Einlegen in den Spulenraum mit einer Bandage und/oder Isolierpapier zu umwickeln. Dabei ist jedoch dieser zusätzliche Arbeitsschritt des Umwickelns der vorgewickelten Spule äußerst aufwendig und somit sowohl zeit- also auch kostenintensiv bei der Herstellung. Weitere Nachteile von handeingelegten, vorgewickelten Spulen ergeben sich aus dem ebenfalls kosten- und zeitintensiven Schritt des Handeinlegens der Spule in den Spulenraum und aus dem Umstand, dass der Spulenraum bei handeingelegten Spulen niemals vollständig ausgenutzt werden kann, da stets ein geringer Spalt zwischen der Spulennut und der eingelegten vorgewickelten Spule verbleibt.

Alternativ wird der Spulenraum eines Statorkörpers direkt mit Spulendraht bewickelt, vorzugsweise mit Hilfe einer Nadelwickelmaschine oder dergleichen, da hierdurch eine höhere Packungsdichte des Spulendrahts in dem Spulenraum erreicht wird und weiterhin eine Schnellbewicklung erfolgen kann.

Ein solches automatisiertes Verfahren zum Einlegen von Kupferdraht in Form einer Feldspule in den Spulenraum zwischen Polhörnern und Statorwand eines zweipoligen Stators ist beispielsweise aus dem Dokument EP 1 225 679 A1 bekannt.

Bei dieser bekannten Anordnung ist der Stator unterteilt in zwei Statorhälften, welche vor dem Bewickeln mit dem Spulendraht zur Isolation der Spulennuten mit Kunststoff umspritzt werden.

Aus der Druckschrift US 3 130 335 A ist ferner ein Motorkern bekannt, bei dem die Spulennuten mit einer nicht-magnetischen Metallfolie ausgekleidet werden, ehe der Spulendraht eingelegt wird. Die radial nach innen überstehenden Abschnitte der Metallfolie werden im Anschluss an das Einlegen des Spulendrahts über ihre gesamte Länge miteinander verbunden, um eine feuchtigkeitsabweisende Schutzschicht für den Spulendraht bereitzustellen.

Die JP 2001 238378 A und die GB 2 430 085 A betreffen weitere Ausgestaltungsvarianten für einen Motorkern. Der Vollständigkeit halber seien auch als weitere Dokumente zum Stand der Technik erwähnt: GB 912 993 A, WO 2008/072443 A1 und US 6 357 689 B1.

Um die aus dem Stand der Technik bekannten Lösungen weiter zu verbessern und den gemäß der Norm DIN EN 60745 geforderten elektrischen Sicherheitsabstand zwischen einem aktiven Teil Eisen und einem Spulendraht von mindestens 2 mm bereitstellen zu können, schlägt die vorliegende Erfindung ein Verfahren zum Einlegen von Draht in Form von wenigstens einer Spule in einen Spulenraum eines Stators mit den Merkmalen des Anspruchs 1 vor, wobei der Spulenraum eine Anzahl von Spulennuten umfasst. Das Verfahren umfasst die Schritte: Einlegen von Isolierpapier in den Spulenraum in der Weise, dass das Isolierpapier im eingelegten Zustand zwei gegenüberliegende Schenkel aufweist, wobei jeder der Schenkel zumindest abschnittsweise aus der jeweiligen Spulennut heraus in einer Richtung senkrecht zu einer Längsachse des Statorsegments über das jeweilige Statorsegment vorsteht, Einlegen des Spulendrahts in den Spulenraum, und Verbinden der beiden Isolierpapier-Schenkel eines in einer Spulennut eingelegten Isolierpapiers, wobei diese zumindest teilweise und wenigstens im Bereich der jeweiligen vorstehenden Abschnitte miteinander verbunden werden. Der Schritt des Verbindens erfolgt mittels einer Vorrichtung zum Verbinden, die zwei stempelförmige Anlageabschnitte aufweist, die zum Herstellen einer Verbindung erhitzt werden können und relativ zueinander bewegbar sind.

Eine solche Gestaltung ist insbesondere dann vorteilhaft, wenn das Isolierpapier an den zu verbindenden Abschnitten mit Backlack beschichtet ist, d.h. einem Klebstoff, der unter Hitzeeinwirkung aufschmilzt. Die beiden Anlageabschnitte sind in ihrer Ausgangsstellung mit einem Abstand zueinander positioniert, so dass sich zwischen ihnen die überstehenden Abschnitte der Isolierpapier-Schenkel erstrecken können. Werden die Anlageabschnitte nun im erwärmten Zustand zueinander bewegt, werden die überstehenden Abschnitte der Isolierpapier-Schenkel gegeneinander gedrückt und die Backlackbeschichtung des Isolierpapiers schmilzt im Bereich der Anlageabschnitte. Hierdurch wird eine stoffschlüssige Verbindung der überstehenden Abschnitte der Isolierpapier-Schenkel geschaffen. Werden die beiden Anlageabschnitte wieder voneinander wegbewegt, bleiben die überstehenden Abschnitte der Isolierpapier-Schenkel verbunden.

Wie im Stand der Technik gezeigt, kann sich ein Stator eines elektrischen Antriebs aus einer Anzahl von Statorsegmenten zusammensetzen, die in einem verbundenen Zustand den Stator bilden. Die Statorsegmente bilden dabei zusammengefügt einen im Wesentlichen im Querschnitt betrachtet kreisförmigen Statorkörper aus, wobei je nach Gestaltung des Statorkörpers zwei oder mehr als zwei Statorsegmente vorgesehen sind, beispielsweise drei, vier, fünf oder mehr, die gemeinsam den Statorkörper bilden können. Diese können gleich große oder unterschiedlich große Statorsegmente umfassen, wobei unter Berücksichtigung der Herstellkosten mehrere Gleichteile vorteilhaft sind.

Der Spulenraum eines Statorsegments kann weiterhin eine Anzahl von Spulennuten, beispielsweise zwei Spulennuten, umfassen. Der Statorkörper, wie auch die einzelnen Statorsegmente, erstreckt sich entlang einer Längsachse, die parallel zu der Rotationsachse eines zugehörigen Rotors ist und in der Regel mit der Rotationsachse des Rotors zusammenfällt. Bevor der Spulendraht in den Spulenraum des Stators eingelegt wird, wird das Isolierpapier, beispielsweise in Streifenform, in die einzelnen Spulennuten in der Weise eingelegt, dass dieses annähernd U- oder V-förmig in diesen aufgenommen ist. Die beiden U- bzw. V-Schenkel der Isolierpapier-Streifen ragen dabei aus der jeweiligen Spulennut heraus in eine Richtung senkrecht zu der Längsachse des Statorsegments über das jeweilige Statorsegment vor. Demgemäß entsteht ein radialer Überstand des Isolierpapiers über das jeweilige Statorsegment. Das Isolierpapier bildet eine Art Tasche aus, in die in einem darauf folgenden Verfahrensschritt der Spulendraht eingelegt wird (Wickelvorgang).

Die radial überstehenden Abschnitte der Isolierpapier-Schenkel werden, wie vorstehend erwähnt, in einem weiteren Verfahrensschritt miteinander verbunden. Dabei müssen die beiden Isolierpapier-Schenkel eines eingelegten Isolierpapierstreifens im Bereich ihres Überstandes über das Statorsegment hinaus nicht vollständig miteinander verbunden werden. Stattdessen kann es ausreichend sein, wenn diese punktuell miteinander verbunden werden und auf diese Weise eine Art geschlossene Tasche zum Schutz des Spulendrahtes vor einem Herausfallen (Abwickeln) während der nachfolgenden Bearbeitungsschritte bieten.

Weiterhin kann das überstehende Isolierpapier einen Abrasionsschutz des eingelegten Spulendrahtes bieten und so im Betrieb eine elektrische Isolation des Spulendrahts gegenüber dem Stator und dem innerhalb des Stators aufgenommenen Rotors bieten. So kann der gemäß DIN EN 60745 geforderte elektrische Sicherheitsabstand von einem aktiven Teil, wie dem Rotor oder Stator, zu einem elektrischen Draht, wie dem Spulendraht, von mindestens 2 mm Luftstrecke eingehalten werden, auch wenn der eingelegte Spulendraht über den verfügbaren Spulenraum hinaus vorsteht, d. h. bei einem Füllgrad von mehr als 100 % in den Spulennuten. In der Praxis war dies bislang nur mit Hilfe einer Bandage um eine vorgewickelte Feldspule oder durch einen geringeren Außendurchmesser des Rotors erreichbar. Letzteres hat eine geringere Leistung des elektrischen Antriebs zur Folge, während erstere Maßnahme, wie bereits vorstehend ausgeführt ist, kosten- und zeitintensiv ist.

Durch den Überstand des Isolierpapiers über das Statorsegment und damit über die Polhörner des Statorsegments hinaus kann mit Hilfe des erfindungsgemäßen Verfahrens die für die elektrische Isolation relevante Luftstrecke vergrößert werden, so dass der elektrische Sicherheitsabstand gemäß DIN EN 60745 eingehalten werden kann.

Es sei darauf hingewiesen, dass die vorstehenden Abschnitte der jeweiligen Isolierpapier-Schenkel nicht notwendigerweise um das gleiche Maß über das Statorsegment radial vorstehen müssen. Ferner kann auch an den einzelnen Isolierpapierstreifen ein Abschnitt mit einer größeren Breite vorgesehen sein, wobei dieser Abschnitt im eingelegten Zustand zur Verbindung der Schenkel genutzt werden kann.

Insbesondere kann der Überstand der Isolierpapier-Schenkel aus der jeweiligen Spulennut heraus über das jeweilige Statorsegment wenigstens 1,5 mm, vorzugsweise 2 mm bis 5 mm betragen. Dabei wird der Überstand gemessen von der jeweiligen Verbindungsfläche eines Statorsegments, d.h. derjenigen Fläche, die in Anlage mit einer korrespondierenden Verbindungsfläche eines benachbarten Statorsegments kommt, wenn diese zur Bildung des gesamten Stators zusammengesetzt sind.

Weiterhin kann das Einlegen des Spulendrahts automatisiert mit Hilfe eines rotierenden Wickelarms erfolgen.

Dabei kann während des Einlegens des Spulendrahts in den Spulenraum der vorstehende Teil des Isolierpapiers jeweils von dem durch die zugehörige Spulennut gebildeten Spulenraum weg gehalten werden, um das Einlegen des Spulendrahts nicht zu behindern. Beispielsweise kann eine entsprechende Wickelschablone mit einem Kern eingesetzt werden, der mit Hilfe eines bewegbaren Niederhalters das überstehende Isolierpapier von der Spulennut weg hält. Auf diese Weise kann das Statorsegment wie üblich bewickelt werden, ohne dass das Risiko besteht, dass das Isolierpapier beim Wickelvorgang nach innen verknickt wird.

Wie vorstehend bereits angegeben, können die Isolierpapier-Schenkel gemäß dem ersten Erfindungsaspekt punktförmig oder flächig miteinander verbunden werden, wobei der Verbindungsabschnitt, d.h. derjenige Abschnitt, der die Verbindungsstelle der Isolierpapier-Schenkel ausbildet, sich im Wesentlichen in Richtung der Längsachse über vorzugsweise 1 bis 4 mm erstreckt. Insbesondere können die Isolierpapier-Schenkel stoffschlüssig miteinander verbunden werden. Definitionsgemäß umfasst eine stoffschlüssige Verbindung eine Verbindung, bei der die Verbindungspartner durch atomare oder molekulare Kräfte zusammengehalten werden. Stoffschlüssige Verbindung zeichnen sich zudem dadurch aus, dass sie nichtlösbare Verbindungen sind, die sich nur durch Zerstörung der Verbindungsmittel trennen lassen, wie beispielsweise Kleben oder Vulkanisieren. Jedoch ist alternativ oder zusätzlich auch ein Formschluss, z.B. durch umknicken des Isolierpapiers, denkbar.

Das erfindungsgemäße Verfahren kann ferner vorsehen, dass das Isolierpapier zumindest abschnittsweise an dem Statorkörper und/oder an dem eingelegten Spulendraht stoffschlüssig fixiert wird. Es kann beispielsweise besonders günstig sein, wenn das eingelegte Isolierpapier vor dem Einlegen des Spulendrahtes an dem Statorkörper fixiert wird, wenn kein Niederhalter oder dergleichen an der Wickelschablone vorgesehen ist, um das Isolierpapier in seiner Stellung relativ zu der Spulennut zu halten. Auch kann nach dem Einlegen des Spulendrahtes ein Fixieren des Isolierpapiers an dem Spulendraht günstig sein.

Alternativ kann nicht erfindungsgemäß es auch vorgesehen sein, dass auf den letzten Verfahrensschritt verzichtet wird, d.h. die beiden Isolierpapierschenkel eines Isolierpapier-Streifens nicht miteinander verbunden werden. Bei dieser Variante ist jedoch vorgesehen, dass zumindest der (in einer Richtung senkrecht zur Längsachse) vorstehende Abschnitt des radial innenliegenden Schenkels des eingelegten Isolierpapiers soweit über das anliegende Polhorn übersteht, dass die radial innenliegenden Schenkel zweier aneinander anliegender Statorhälften aneinander anstoßen oder sich gegenseitig überlappen, wenn die Statorhälften zusammengesetzt sind. Weiterhin ist bei dieser Lösung ebenfalls vorgesehen, dass das Isolierpapier beim Einlegen von Spulendraht zumindest abschnittsweise an der jeweiligen Spulennut stoffschlüssig fixiert ist.

Auch bei dieser Variante wird ein verbesserter Abrasionsschutz durch die radial innere geschlossene Isolierpapier-Schicht eines zusammengesetzten Statorkörpers bereitgestellt. Zudem wird hierdurch der gemäß der Norm DIN EN 60745 geforderte elektrische Sicherheitsabstand zwischen einem aktiven Teil Eisen und einem Spulendraht von mindestens 2 mm bereitgestellt.

Sowohl zur Herstellung einer stoffschlüssigen Verbindung als auch zur Herstellung einer vorstehend beschriebenen stoffschlüssigen Fixierung des Isolierpapiers kann ein zusätzliches Fixierungsmittel auf das Isolierpapier, wenigstens an den zu verbindenden Abschnitten, aufgebracht werden.

So kann das Fixierungsmittel auf den eingelegten Spulendraht, das Statorsegment und/oder das Isolierpapier aufgebracht werden und das Isolierpapier in Anlage an dem Fixierungsmittel fixiert oder Teile des Isolierpapiers miteinander verbunden werden. Dabei ist es grundsätzlich möglich, das Fixierungsmittel noch vor dem Aufwickeln des Spulendrahts auf diesen aufzubringen oder alternativ dieses erst auf die fertig gestellte bzw. aufgewickelte Feldspule aufzubringen. Gleiches gilt für das Isolierpapier, d.h. das Fixierungsmittel kann auf das eingelegte Isolierpapier aufgebracht werden oder dieses wird bereits zuvor zumindest teilweise mit dem Fixierungsmittel beschichtet.

Grundsätzlich ist es sowohl denkbar, nur in einem bestimmten Bereich ein Fixierungsmittel aufzubringen als auch den gesamten Abschnitt der Spulennut, der aufgewickelten Feldspule bzw. des Spulendrahts und/oder des Isolierpapiers mit Fixierungsmittel zu beschichten.

Das zusätzliche Fixierungsmittel kann dabei einen Klebstoff, Träufelharz oder Backlack umfassen. Besonders bevorzugt ist jedoch eine Ausgestaltung mit Backlack, der durch Erwärmen aufgeschmolzen werden kann und beim Abkühlen eine stoffschlüssige Verbindung der angrenzenden Teile schafft. Hierdurch wird eine vereinfachte Herstellung erreicht, da sowohl das Isolierpapier als auch der Spulendraht und die Spulennut bereits vor dem eigentlichen Wickelvorgang beschichtet werden können. Des Weiteren kann in einem nachfolgenden Fertigungsschritt der zusammengesetzte Statorkörper bzw. Stator ebenfalls durch Verbacken mit einer weiteren schützenden Beschichtung versehen werden, wobei das Beschichten des gesamten Statorkörpers bzw. Stators und das Fixieren des Isolierpapiers an dem Stator bzw. an dem Spulendraht in einem gemeinsamen Schritt erfolgen kann.

Weiterhin kann ein einem weiteren Verfahrensschritt auf wenigstens einem der Endabschnitte des Spulendrahtes ein Isolierelement aufgebracht werden, beispielsweise ein hülsen- oder schlauchförmiges Isolierelement, welches in einem weiteren Verfahrensschritt fixiert werden kann. Diese Maßnahmen ermöglichen eine optimale elektrische Isolierung und zudem einen Schutz gegen Abrasion.

Die Statorsegmente können zudem miteinander verbunden werden, wobei vorzugsweise die Verbindung über einen Stoffschluss hergestellt wird. Dabei ist es denkbar die Statorsegemente beispielsweise zu verschweißen. Alternativ kann für den Stoffschluss jedoch auch ein zusätzliches Verbindungsmittel verwendet werden, beispielsweise Lot, Klebstoff, Träufelharz oder Backlack.

Schließlich soll auch eine Vorrichtung zur Herstellung eines Stators mit den vorstehenden Merkmalen geschützt sein, welche die Merkmale des Anspruchs 10 aufweist. Diese umfasst eine Einrichtung zum Einlegen von Isolierpapier in den Spulenraum, wobei beim Einlegen des Isolierpapiers sichergestellt ist, dass das Isolierpapier im eingelegten Zustand zwei gegenüberliegende Schenkel aufweist, von denen jeder aus der jeweiligen Spulennut heraus in einer Richtung senkrecht zu der Längsachse des Stators über das jeweilige Statorsegment vorsteht. Ferner umfasst die erfindungsgemäße Einrichtung zum Durchführen des Verfahrens gemäß dem ersten Erfindungsaspekt eine Vorrichtung zum teilweise Verbinden der Isolierpapier-Schenkel wenigstens im Bereich ihrer vorstehenden Abschnitte. Weiterhin weist die Einrichtung erfindungsgemäß zum Verbinden zwei stempelförmige Anlageabschnitte auf, die zum Herstellen einer Verbindung erhitzt werden können und relativ zueinander bewegbar sind.

Eine solche Gestaltung ist insbesondere dann vorteilhaft, wenn das Isolierpapier an den zu verbindenden Abschnitten mit Backlack beschichtet ist, d.h. einem Klebstoff, der unter Hitzeeinwirkung aufschmilzt. Die beiden Anlageabschnitte sind in ihrer Ausgangsstellung mit einem Abstand zueinander positioniert, so dass sich zwischen ihnen die überstehenden Abschnitte der Isolierpapier-Schenkel erstrecken können. Werden die Anlageabschnitte nun im erwärmten Zustand zueinander bewegt, werden die überstehenden Abschnitte der Isolierpapier-Schenkel gegeneinander gedrückt und die Backlackbeschichtung des Isolierpapiers schmilzt im Bereich der Anlageabschnitte. Hierdurch wird eine stoffschlüssige Verbindung der überstehenden Abschnitte der Isolierpapier-Schenkel geschaffen. Werden die beiden Anlageabschnitte wieder voneinander wegbewegt, bleiben die überstehenden Abschnitte der Isolierpapier-Schenkel verbunden.

Alternativ können die Anlageabschnitte nicht erfindungsgemäß jedoch auch nicht erwärmbar ausgestaltet sein. In diesem kann ein Fixierungsmittel verwendet werden, dass nicht erwärmt werden muss, um eine Verbindung herzustellen. In einer alternativen Ausgestaltungsvariante können die Anlageabschnitte auch zur Herstellung einer formschlüssigen Verbindung der überstehenden Abschnitte der Isolierpapier-Schenkel genutzt werden.

Schließlich sind die Anlageabschnitte über eine Steueranordnung ansteuerbar und können abhängig von der Ansteuerung unterschiedlich große Bewegungshübe relativ zueinander durchführen. Auf diese Weise kann ein Versatz der verbundenen überstehenden Abschnitte der Isolierpapier-Schenkel zweier benachbarter Statorsegmente sichergestellt werden, so dass sich diese beim Zusammenfügen der Statorsegmente nicht gegenseitig behindern und unerwünscht verknicken.

Die Erfindung wird nachfolgend unter Bezugnahme auf die beigefügten Figuren detaillierter beschrieben.

Die beigefügten Figuren zeigen beispielhaft eine bevorzugte Ausführungsform, bei der die einzelnen Merkmale der Erfindung miteinander kombiniert sind. Der Fachmann wird diese jedoch selbstverständlich auch losgelöst voneinander betrachten und/ oder zu anderen sinnvollen Kombinationen zusammenfassen können.

Es zeigen schematisch:
- Figur 1: eine isometrische Ansicht eines zweipoligen Stators;
- Figur 2: einen Querschnitt senkrecht zu der Längsachse des Stators der Figur 1;
- Figur 3: eine Draufsicht auf eine Statorhälfte des Stators gemäß Figuren 1 und 2;
- Figur 4a: eine Detailansicht einer Verbindungsstelle eines Stators gemäß dem Detail Z der Figur 2; und
- Figur 4b: eine Detailansicht zweier verbundener Statorhälften eines Stators gemäß einer alternativen Ausführungsform.

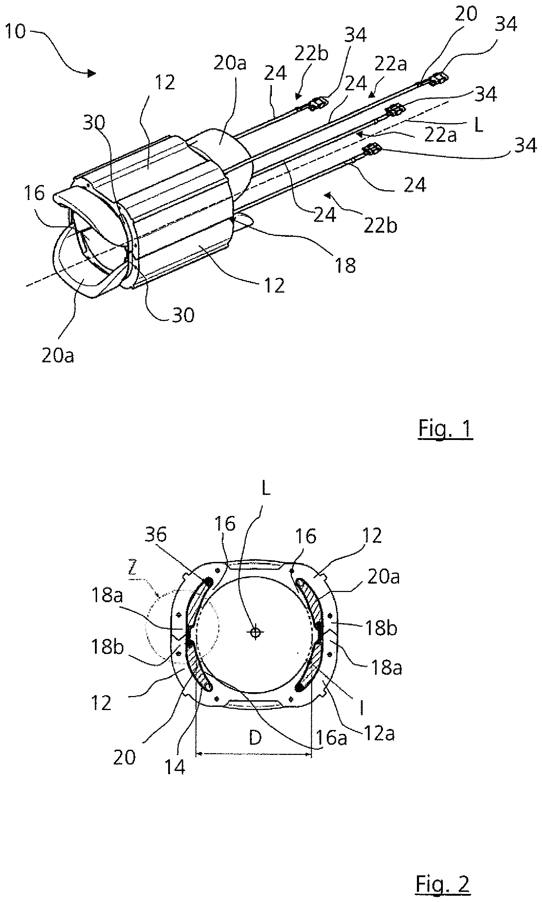

In der Figur 1 ist ein zweipoliger Stator eines elektrischen Antriebs gezeigt und allgemein mit dem Bezugszeichen 10 bezeichnet. Dieser zweipolige Stator umfasst einen Statorkörper, welcher im Bereich einer sich entlang einer Längsachse L des Stators erstreckenden Trennungsebene in zwei Statorsegmente bzw. Statorhälften 12 geteilt ist. Die beiden Statorhälften 12 sind dabei als identische Teile ausgebildet, was die Herstellung des Statorkörpers besonders einfach macht. In üblicher Weise ist der dargestellte Statorkörper des Stators 10 durch Stanzpaketieren von identischen Blechlamellen zu einem Blechpaket hergestellt.

Weiterhin umfasst jede der Statorhälften 12 zwei Polhörner bzw. Polspitzen 16 (vgl. auch Fig. 2), die sich von der Innenumfangsfläche 12a der jeweiligen Statorhälfte 12 nach innen erstrecken und somit den Durchmesser D eines Innenraums I des Stators 10 für einen darin aufzunehmenden Rotor (nicht dargestellt) begrenzen.

Die beiden Statorhälften 12 sind im Bereich zweier Verbindungsstellen 18 miteinander verbunden, wobei jede Statorhälfte 12 eine erste Verbindungsstelle 18a sowie eine zweite Verbindungsstelle 18b aufweist.

Weiterhin sind in Figur 1 Endabschnitte bzw. Drahtenden 22a und 22b eines spulenförmig, d.h. in der Form einer Spule 20a mit einer Wicklungsstruktur und Wickelköpfen 23a und 23b, eingelegten Spulendrahts 20 zu erkennen. Wie aus Figur 1 ersichtlich, sind die Drahtenden 22a, 22b als Anschlussdrähte jeweils mit einem Schrumpfschlauch 24 als Schlauchelement versehen, welches nicht außerhalb des Stators 10 endet, sondern in den Stator 10 eingeschoben ist, d.h. in die Wicklungsstruktur der Spule 20a hineinragt, um eine optimale Isolierung zu erreichen und einen Schutz vor leitfähigen Ablagerungen zu erhalten. Als Schlauchelemente kommen auch Glasgewebeschläuche in Betracht.

In anderen Ausführungsbeispielen könnte statt des Schlauchelements auch ein Hülsenelement als Isolationselement vorgesehen sein.

Wie in Figur 2 deutlich zu erkennen ist, wird die erste Verbindungsstelle 18a der beiden Statorhälften 12 jeweils durch eine entlang der Längsachse L verlaufende, im Querschnitt betrachtet V-förmige Nut 18a gebildet, während die zweite Verbindungsstelle 18b durch einen korrespondierenden entlang der Längsachse L verlaufenden V-förmigen Vorsprung 18b gebildet ist. Durch die spezielle Ausbildung der ersten und zweiten Verbindungsstelle 18a und 18b kann eine einfache Herstellung der Verbindungsstellen 18 ermöglicht werden.

Weiterhin wird durch die Ausprägung der ersten und zweiten Verbindungsstellen 18a und 18b eine Ausrichtung der Statorhälften 12 zueinander erreicht, wenn die jeweils korrespondierende erste Verbindungsstelle 18a mit der zweiten Verbindungsstelle 18b in Anlage gebracht wird. Schließlich kann durch diese spezielle Ausgestaltung der Verbindungsstellen 18 gewährleistet werden, dass die Statorhälften 12 bei der Herstellung des Statorkörpers in direkter Anlage zueinander aus dem Material ausgestanzt werden können, was zu einem geringeren Anfallen von Verschnitt führt.

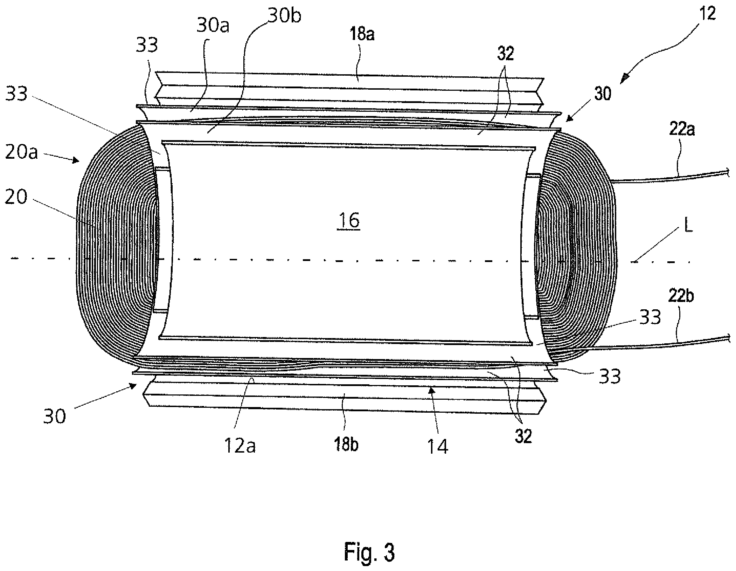

In Figur 2 ist ebenfalls deutlich gezeigt, dass die Statorinnenwand bzw. Innenumfangsfläche 12a und die radial äußere Wand 16a der Polhörner 16 eine Nut (Spulennut) 14 begrenzen, in welche der aus Kupfer hergestellte Spulendraht 20 aufgenommen werden kann. Wie in den Figuren (vgl. insbesondere Figuren 2 und 3) zu erkennen ist, wird der Spulendraht 20 in der Form einer Spule 20a in den durch die Nuten 14 einer Statorhälfte 12 ausgebildeten Spulenraum eingelegt.

In Figur 2 ist weiterhin gezeigt, dass der eingelegte Spulendraht 20 nicht, wie in der Praxis üblich, mit einem Füllgrad von weniger als 100 % in die Nut 14 eingelegt ist, sondern über die Nut 14 hinaus gewickelt ist. Dies ist besonders vorteilhaft, da durch einen Füllgrad von mehr als 100 % eine erhöhte Leistung eines Elektromotors mit einem derart gewickelten Stator 10 gegenüber einem Elektromotor mit einem konventionell gewickelten Stator erreicht werden kann. Insbesondere ermöglicht es die in Figur 2 gezeigte Wicklungsform, insgesamt mehr Spulenwindungen in einem hohlzylindrischen Volumenelement (welches sich zwischen den Statorhälften und der Außenseite eines Ankers befindet) anzuordnen als nach dem Stand der Technik möglich. Bei gleichem beanspruchtem Bauraum kann so insgesamt mit der Spule 20a ein höherer magnetischer Fluss erzeugt werden und damit eine höhere Leistung des Elektromotors erreicht werden. Ebenso kann für eine gegebene Anzahl von Windungen die Spule 20a erheblich flacher ausgelegt werden als bisher nach dem Stand der Technik möglich, so dass bei gleicher Windungszahl ein Anker größeren Durchmessers verwendet werden kann. Damit ergibt sich gegenüber dem Stand der Technik ein höheres Drehmoment auf die Ankerwicklungen, was im Ergebnis ebenfalls zu einer Leistungssteigerung führt. Ebenso kann bei gleichbleibender Leistung eine Verkleinerung des Elektromotors und damit eine Verringerung des Fadenmaßes eines zugehörigen Elektrohandwerkzeuges erreicht werden.

Da in dem über die Nut 14 hinausgehenden Bereich die mechanisch stabilisierende Wirkung der Polhörner 16 wegfällt, sind zusätzliche Maßnahmen erforderlich, um zu gewährleisten, dass die Spule ihre Form beibehält und sich die Wicklungen nicht voneinander lösen.

Wie in den Figuren gezeigt ist, umfasst der zweipolige Stator 10 mit seinen beiden Statorhälften 12 nicht nur einen durch die Statorhälften 12 gebildeten Statorkörper, der mit Spulendraht 20 bewickelt ist, sondern auch Isolierpapier 30, das in die Nuten 14 eingelegt wird, ehe der Spulendraht 20 auf die jeweilige Statorhälfte 12 aufgewickelt wird.

Im eingelegten Zustand weist das Isolierpapier, welches beispielsweise in Form von einem Streifen in die Nut 14 eingelegt wird, im Querschnitt betrachtet eine V- bzw. U- Form mit zwei gegenüberliegenden Schenkeln 30a, 30b auf. Diese ragen in radialer Richtung über die Spulennut 14 und auch über das Statorsegment 12 vor.

Das Isolierpapier 30 dient dazu, die durch den Spulendraht 20 gebildete Spule 20a im Betrieb eines den Stator 10 aufweisenden Elektromotors vor Abrasion zu schützen und elektrisch gegenüber dem Statorkörper sowie dem benachbarten Rotor (nicht gezeigt) zu isolieren.

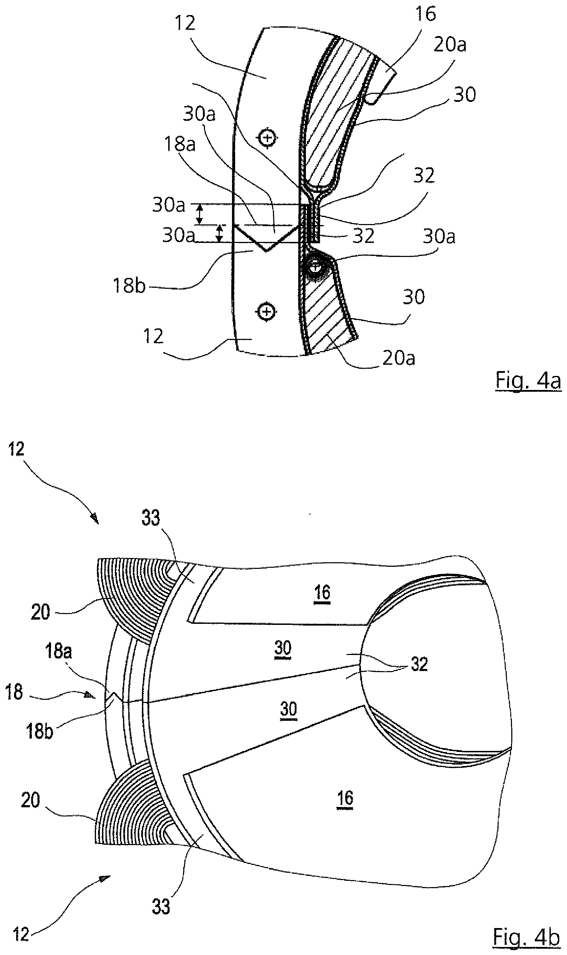

Als radialer Überstand 32 wird dabei der Teil des Isolierpapiers 30 verstanden, der bezogen auf die Längsachse L radial, d.h. in einer Richtung senkrecht zu der Längsachse L, über die benachbarte Verbindungsfläche des Statorsegements übersteht. Dabei wird der Überstand gemäß dem ersten Erfindungsaspekt von der Verbindungsfläche an der zugehörigen Verbindungsstelle 18a, 18b bis zu dem freien Ende des Isolierpapier-Schenkels 30a, 30b gemessen. Im Falle der speziellen Ausgestaltung der Verbindungsstellen als V-Nut bzw. V-Vorsprung wird als Referenz die zu dem Isolationspapier gewandte Endkante der Verbindungsstelle 18a, 18b gewählt (vgl. Figur 4a).

Wie sich der Figur 4a weiter entnehmen lässt, werden die radialen Überstände 32 der Schenkel 30a, 30b gemäß einem ersten Erfindungsaspekt dann, wenn der Spulendraht eingelegt wurde, im Bereich ihrer freien Enden miteinander verbunden. Dadurch wird eine geschlossene Tasche ausgebildet, die ein unerwünschtes Abwickeln des Spulendrahtes bei der weiteren Handhabung im Herstellungsprozess verhindern soll. Die Wicklungen der Spule werden somit gesichert.

Hierzu wird bei der gezeigten Ausführungsform die Verbindung der überstehenden Abschnitte der Isolierpapier-Schenkel durch Verwendung einer Backlackbeschichtung des Isolierpapiers an seiner Innenseite, d.h. im eingelegten Zustand an seiner dem Spulendraht zugewandten Seite erreicht. Unter einer Backlackbeschichtung wird eine Beschichtung mit einem Kunststoff verstanden, der eine durch Erhitzen verklebende Wirkung aufweist. Diese Beschichtung kann, muss aber nicht, auf der gesamten Innenseite des Isolierpapiers aufgebracht sein.

Alternativ zu der Lösung gemäß dem ersten Erfindungsaspekt können die überstehenden Abschnitte des Isolierpapiers 30 auch nicht in einem weiteren Verfahrensschritt nach dem Einlegen des Spulendrahtes verbunden werden, sondern unverbunden bleiben (offene Tasche), wie in der Figur 4b gezeigt. Dabei ist zumindest der Überstand des radial innenliegenden Isolierpapierschenkels 32 derart gewählt, dass die radial innenliegenden Abschnitte 32 des überstehenden Isolierpapiers dann, wenn die Statorhälften 12 zusammengesetzt sind, d.h. im Bereich ihrer Verbindungsstellen 18 aneinander anliegen, die radial innenliegenden Isolierpapierschenkel der beiden Statorhälften 12 aneinander anliegen bzw. sich überlappen.

Dabei wird der radiale Überstand bzw. vorstehende Abschnitt des Isolierpapiers gemäß diesem Erfindungsaspekt nicht als der über das Statorsegment 12 überstehende Abschnitt verstanden, sondern als Überstand über die Spulennut 14. Demgemäß erstreckt sich der vorstehende Abschnitt der radial innenliegenden Schenkel von der Spitze des jeweiligen Polhorns 16 zu dem freien Ende des zugehörigen radial innenliegenden Isolierpapier-Schenkels.

Neben dem radialen Überstand kann, wie in Figur 3 zu erkennen ist, auch ein (bezogen auf die Längsachse L des Stators 10) axialer Überstand 33 des Isolierpapiers 30 sinnvoll sein, um den elektrischen Sicherheitsabstand von 2 mm Luftstrecke zwischen Spulendraht und aktivem Eisen zu gewährleisten. Als axialer Überstand 33 wird der Teil des Isolierpapiers 30 verstanden, der bezogen auf die Längsachse L axial, d.h. in einer Richtung parallel zu der Längsachse L, über die Polhörner 16 übersteht.

Als weitere Maßnahme zur Sicherung der Wicklungen der Spule ist eine zumindest teilweise stoffschlüssige Verbindung der Windungen der Spule 20a untereinander mindestens in Teilen des außerhalb der Nut 14 befindlichen Bereiches der Spule 20a vorteilhaft. Diese stoffschlüssige Verbindung kann beispielsweise unter Verwendung eines Backlackdrahtes verwirklicht werden. Unter einem Backlackdraht wird ein Spulendraht verstanden, der eine temperaturfeste Grundisolation und eine durch Erhitzen verklebende, oft auch dabei polymerisierende Deckschicht aufweist. Zusätzlich oder alternativ kann die stoffschlüssige Verbindung auch mittels eines Träufelharzes geschaffen werden, welches aufgrund der Kapillarwirkung der Zwischenräume zwischen den Windungen in der Spule 20a die Spule 20a nach einem Eintauchen praktisch vollständig durchdringt.

Um die beiden Drahtenden bzw. Drahtendabschnitte 22a, 22b, welche beim Wickelvorgang von der Spule 20a an den Statorhälften 12 entstehen, wie vorstehend erwähnt, als Anschlussdrähte bzw. elektrische Anschlüsse des Elektromotors zu nutzen, werden die Drahtenden 22a, 22b in ausreichend großer Länge aus der Spule 20a herausgeführt, um die Funktion von aus dem Stand der Technik bekannten separaten Litzen zu übernehmen und einen Anschluss der Spule 20a an eine Stromquelle oder einen Stromverteiler (nicht gezeigt) zu ermöglichen. Auf die Drahtendabschnitte 22a, 22b der Spule werden zur elektrischen Isolation schlauch- oder hülsenförmige Isolationselemente 24 aufgefädelt, welche bis in die jeweilige Spulennut hineinreichen. An den freien Enden der Drahtendabschnitte 22a, 22b können separate Anschlusselemente, beispielsweise in der Form einer Crimpkralle oder Steckhülse 34 (vgl. Figur 1) in der Weise befestigt werden, dass diese die isolierende Außenschicht (im dargestellten Beispiel eine isolierende Grundschicht sowie eine darauf aufgebrachte Backlackschicht) des Spulendrahts 20 sowie der Isolationsschlauch 24 durchdringen und eine elektrische Kontaktierung der Spule ermöglichen. Die Anschlusselemente können zudem in ihrer Außengeometrie in der Art eines Steckers ausgebildet sein, der in einen korrespondierenden Steckverbinder an der Stromquelle bzw. dem Stromverteiler des elektrischen Antriebs eingesteckt werden kann.

Nachfolgend wird der Herstellungsprozess eines zweipoligen Stators unter Bezugnahme auf die Figuren kurz beschrieben:
Aus einem durch Stanzpaketieren von identischen Blechlamellen hergestellten Blechpaket werden die beiden Statorhälften 12 in Anlage zueinander ausgestanzt, die in einem weiteren Prozessschritt mit Kupferdraht bewickelt werden sollen.

In einem weiteren Schritt wird streifenförmiges Isolierpapier 30 in die Nuten 14 der jeweiligen Statorhälften 12 eingelegt.

Um zu gewährleisten, dass das Isolierpapier 30 relativ zu der jeweiligen Statorhälfte 12, in deren Nut 14 das Isolierpapier 30 eingelegt wird, fixiert ist, können die Statorhälften 12 in einem vorgeschalteten Prozessschritt vor dem Einlegen des Isolierpapiers 30 in die zugehörigen Nuten 14 zumindest in dem Bereich der Nuten erwärmt werden, beispielsweise auf eine Temperatur von wenigstens 150° Celsius. Das Isolierpapier 30 kann auf derjenigen Seite, mit der es in Anlage an die erwärmte Nut 14 der Statorhälften 12 kommen soll, zumindest abschnittsweise mit einem Backlack beschichtet sein. Das eingelegte Isolierpapier 30 kann dann, sobald es in die zugehörige Nut 14 eingelegt ist, für einige Sekunden an die Nutinnenseiten angepresst werden. Dabei schmilzt die Backlackbeschichtung an dem Isolierpapier 30 an und verklebt dieses mit der Statorhälfte 12. Eine Fixierung des Isolierpapiers 30 bei dem nachfolgenden Prozessschritt des Bewickelns ist folglich nicht mehr notwendig.

Das eingelegte Isolierpapier 30 weist, wie bereits vorstehend beschrieben, einen radialen Überstand 32 über die jeweiligen Statorhälften 12 hinaus auf. Dieser Überstand 32 kann, wie vorstehend erwähnt, während des nachfolgenden Wickelvorgangs zusätzlich von der Spulennut weg gehalten werden, um während des Bewickelns sicherzustellen, dass das Isolierpapier 30 nicht durch den Spulendraht 20 geknickt wird. Somit kann eine Fixierung des Isolierpapiers 30 alternativ oder zusätzlich auch mit Hilfe einer Niederhalteranordnung (z.B. als Teil einer Wickelschablone, auf der das Statorsegment während des Wickelvorgangs angebracht werden kann) erreicht werden, wobei diese die überstehenden Abschnitte 32 der Isolationspapier-Schenkel 30a, 30b fixiert.

In einem weiteren Schritt wird jede der Statorhälften 12 automatisiert mit Hilfe eines Wickelarms mit dem Spulendraht 20 bewickelt. Um eine Bewicklung der Statorhälften 12 zu erreichen, bei der der Füllgrad der Spulennut 14 über 100 % liegt, kann eine Wickelschablone (nicht dargestellt) verwendet werden, die während des Wickelvorgangs die Spule zusätzlich stabilisiert.

Ein nicht dargestelltes Platzhalterelement, insbesondere ein Stift oder dergleichen, kann in den Bereich des Spulenraums in der Weise eingelegt werden, dass sich beim automatisierten Einlegen des Spulendrahts 20 in den Spulenraum der durch das Platzhalterelement begrenzte Hohlraum 36 in der Wicklungsstruktur der Spule 20a ergibt (vgl. Figur 2). Nach dem Entfernen des Platzhalterelements aus der wenigstens einen Spulennut 14 kann das schlauch- oder hülsenförmige Isolationselement 24 an dem Drahtendabschnitt angebracht und in den verbleibenden Hohlraum 36 eingeführt werden.

Das Platzhalterelement kann separat oder integral mit der Wickelschablone ausgebildet sein. Der hierdurch gebildete Hohlraum 36 kann auch genutzt werden, um ein Temperatursensorelement in dem wenigstens einen Hohlraum 36 der Spule 20a zu fixieren.

Bevor die verwendete Wickelschablone wieder entnommen wird, um den Statorkörper weiteren Fertigungsschritten zuzuführen, können die überstehenden Abschnitte der Isolierpapier-Schenkel 30a, 30b miteinander mit Hilfe einer entsprechenden Einrichtung (nicht dargestellt) verbunden werden. Diese weist beispielsweise zwei Anlageabschnitte in der Art eines Stempels auf, die relativ zueinander bewegt werden können, um das Isolationspapier zwischen sich einzuklemmen. Die Anlageabschnitte sind erhitzt und leiten während des Klemmvorgangs die Wärme in das mit Backlack beschichtete Isolationspapier ein. Der Backlack schmilzt und erzeugt hierdurch die Verbindung der Isolationspapier-Schenkel.

Die verbundenen Überstände der Isolationspapier-Schenkel bilden eine geschlossene Tasche aus, in der in Abhängigkeit von der Platzierung der Verbindung zusätzlich ein Isolationsschlauch 24 eingeführt werden kann. Dieser wird nach Abschluss des Wickelvorgangs nur lose auf das Drahtende 22a, 22b aufgefädelt und durch die gebildete Tasche des Isolationspapiers 30 für die weiteren Schritte des Herstellungsverfahrens in seiner Stellung gehalten, bis der Isolationsschlauch 24 in einem weiteren Verfahrensschritt mittels eines Fixiermittels in der Wicklungsstruktur der Spule 20a fixiert wird. Das Fixiermittel kann Klebstoff oder Träufelharz, vorzugsweise ein dual härtendes Harz umfassen.

Die stempelförmigen Anlageabschnitte könnten dabei über eine Steueranordnung (nicht dargestellt) angesteuert werden, sodass der jeweilige Bewegungshub jedes der Anlageabschnitte einstellbar ist. Auf diese Weise kann der Verbindungsabschnitt der jeweiligen Isolierpapierstreifen, d.h. derjenige Abschnitt, an dem die Isolierpapier-Schenkel 30a, 30b miteinander verbunden werden, mit einem unterschiedlich großen Abstand von der Längsachse L angeordnet werden. Hierdurch wird ermöglicht, dass die Verbindungsabschnitte zweier Statorhälften beim Zusammenfügen der Statorhälften nicht aufeinander stoßen. Somit werden die Verbindungsabschnitte jeweils mit Versatz zueinander ausgebildet, wie beispielsweise in der Figur 4a zu erkennen ist.

Zudem kann in einem weiteren Schritt die Spule 20a mindestens teilweise verbacken bzw. "angebacken" werden. Aus diesem Grund kann bei dem vorliegenden Herstellungsprozess ein Backlackdraht als Spulendraht 20 verwendet werden, d.h. ein Kupferdraht mit einer temperaturfesten Grundisolation und einer zusätzlichen Backlack-Deckschicht, welche bei Temperaturen von etwa 150°C bis 200°C erweicht und aushärtet, so dass die einzelnen Spulenwindungen der Spule 20a von dem ausgehärteten Backlack zumindest für die nachfolgenden Handhabungsschritte während der Fertigung in einem Verbund miteinander gehalten werden. Um den Backlack entsprechend zu erwärmen, wird beispielsweise Strom in die Spule 20a eingeleitet, so dass diese sich infolge ihres elektrischen Widerstands auf die gewünschte Temperatur (etwa 150°C bis 200°C) erhitzt. Für eine vorläufige Stabilisierung der Spule 20a genügt ein Stromfluss von ca. 50A für einen Zeitraum für ca. 4s, wodurch die Taktzeiten der Fertigung gering gehalten werden können. In einem solchen Verfahrensschritt, in dem die einzelnen Drahtwindungen zu einer Spule 20a verbacken werden, kann auch der bereits verbundene Überstand 32 des Isolierpapiers 30 an die Spule 20a angebacken werden.

Schließlich können die Anschlusselemente an den freien Enden der Drahtendabschnitte 22a, 22b befestigt werden, wobei diese bevorzugt nicht nur an den Drahtendabschnitten 22a, 22b angreifen, sondern im befestigten Zustand auch den Schrumpfschlauch 24 durchdringen, um auf diese Weise eine optimale Isolation und Schutzwirkung zum Schutz der Drahtendabschnitte 22a, 22b bereitstellen zu können.

Nachdem die beiden Statorhälften 12 auf diese Weise hergestellt und bewickelt sind, werden diese miteinander verbunden, um gemeinsam den Statorkörper zu bilden. Hierzu werden die beiden Statorhälften 12 im Bereich ihrer Verbindungsstellen 18 aneinander angelegt, wobei jeweils eine erste Verbindungsstelle 18a einer Statorhälfte 12 in Anlage mit einer zweiten Verbindungsstelle 18b der jeweils anderen Statorhälfte 12 gebracht wird.

Wie in Figur 4a gezeigt ist, stoßen dabei die Verbindungsabschnitte der Isolierpapier-Schenkel 30a, 30b der beiden zusammengefügten Statorhälften 12 nicht gegeneinander, sondern sind jeweils mit Versatz zueinander angeordnet.

Die beiden aneinander anliegenden Statorhälften 12 können in einem weiteren Schritt miteinander verklebt, verlötet oder verschweißt werden. Alternativ können sie auch mittels Tauchimprägnierung aneinander fixiert werden. Hierzu können die beiden aneinander anliegenden Statorhälften 12 bzw. die aufgewickelte Spule 20a erwärmt und in ein Tauchbad, insbesondere mit dual härtendem Harz (Träufelharz bzw. Dualharz) eingetaucht werden, welches sowohl unter Wärmeeinwirkung als auch unter UV-Licht aushärtet. Aufgrund der Kapillarwirkung der Zwischenräume zwischen den einzelnen Windungen der Spule 20a wird diese weitgehend von dem Träufelharz durchsetzt. Dadurch, dass die Spule 20a erwärmt wird, kann das Harz an der Spule 20a und insbesondere auch im Inneren der Spule 20a zwischen den Windungen bereits während des Tauchvorgangs aushärten, wodurch die gesamten Spule 20a mechanisch soweit stabilisiert werden kann, dass sie der mechanischen Beanspruchung im späteren Einsatz standhält. In den Außenbereichen des Stators 10, die nicht die gleiche Temperatur wie die Spule 20a haben, kann im Fall der Verwendung eines Dualharzes das Harz in einem weiteren Schritt mittels UV-Licht ausgehärtet werden.

Die Tauchimprägnierung dient nicht nur als zusätzlicher Schutz des gesamten Statorkörpers vor Abrasion, sondern kann auch als Statorfixiermittel zur stoffschlüssigen Verbindung der Statorhälften 12 miteinander eingesetzt werden. Grundsätzlich ist es jedoch auch denkbar, vor dem Schritt der Tauchimprägnierung die beiden Statorhälften beispielsweise durch Kleben, Schweißen oder Löten oder dergleichen stoffschlüssig miteinander zu verbinden. Dabei ist sowohl denkbar, nur einzelne Fixierungspunkte anzubringen, als auch eine Verbindungsnaht entlang der Verbindungsstellen 18 vorzusehen, um die Statorhälften während der Tauchimprägnierung in ihrer relativen Lage zueinander zu halten.

Das Statorfixiermittel, d.h. in dem beschriebenen Fall das Dualharz kann auch als Fixiermittel zur Fixierung des Isolationsschlauchs und/oder des Temperatursensors dienen.

Die vorstehend beschriebene Tauchimprägnierung ist äußerst vorteilhaft, da diese eine Beschichtung von Spule und Statorkörper sowie das Fixieren der Statorhälften aneinander in einem einzigen Prozessschritt ermöglicht. Weiterhin wird durch die verwendete Tauchimprägnierung sichergestellt, dass der Stator ein in sich sowohl elektrisch optimal isoliertes als auch gegen Abrasion geschütztes Gesamtsystem bildet. Das vorstehend beschriebene teilweise Verbacken bzw. Anbacken der Spulenwindungen kann durch die Kombination mit dem weiteren Prozessschritt des Tauchimprägnierens innerhalb eines Zeitfensters von etwa 3 Sekunden vorgenommen werden, da hierdurch die Windungen der Spule nur relativ zu einander in dem Maße gesichert werden müssen, dass die Wickelschablone entnommen werden kann. Die in einem weiteren Prozessschritt vorgenommene Tauchimprägnierung sichert die ausreichende Stabilität der Spule im Betrieb des elektrischen Antriebs. Wollte man die Spule nur durch Verbacken der Backlackbeschichtung des Spulendrahtes fixieren, wären höhere Backzeiten in der Wickelmaschine notwendig, was insgesamt die Taktzeit bei der Herstellung unvorteilhaft erhöhen würde.

Der fertiggestellte Stator 10 kann nachfolgend in ein Motorgehäuse (nicht gezeigt) eingesetzt werden.

## Patentansprüche

1. Verfahren zum Einlegen von Draht (20) in Form von wenigstens einer Spule (20a) in einen Spulenraum eines Statorsegments (12), wobei der Spulenraum eine Anzahl von Spulennuten (14) umfasst, umfassend die folgenden Schritte:
- Einlegen von Isolierpapier (30) in den Spulenraum in der Weise, dass das Isolierpapier (30) im eingelegten Zustand zwei gegenüberliegende Schenkel (30a, 30b) aufweist, wobei jeder der Schenkel zumindest abschnittsweise aus der jeweiligen Spulennut (14) heraus in einer Richtung senkrecht zu einer Längsachse (L) des Statorsegments (12) über das jeweilige Statorsegment (12) vorsteht,
- Einlegen des Spulendrahts (20) in den Spulenraum, und
- Verbinden der beiden Isolierpapier-Schenkel eines in einer Spulennut eingelegten Isolierpapiers mittels einer Vorrichtung zum Verbinden, wobei diese beiden Isolierpapier-Schenkel zumindest teilweise und wenigstens im Bereich der jeweiligen vorstehenden Abschnitte (32) miteinander verbunden werden, und wobei die Vorrichtung zum Verbinden zwei stempelförmige Anlageabschnitte aufweist, die zum Herstellen einer Verbindung erhitzt werden können und relativ zueinander bewegbar sind.

2. Verfahren nach Anspruch 1,
wobei die Isolierpapier-Schenkel (30a, 30b) punktförmig oder flächig miteinander verbunden werden und wobei der Bereich, in dem die Isolierpapier-Schenkel miteinander verbunden sind, sich im Wesentlichen in Richtung der Längsachse über vorzugsweise 1 bis 4 mm erstreckt.

3. Verfahren nach einem der Ansprüche 1 oder 2,
wobei die Isolierpapier-Schenkel stoffschlüssig miteinander verbunden werden.

4. Verfahren nach einem der Ansprüche 1 bis 3,
wobei das Isolierpapier (30) zumindest abschnittsweise an dem Statorkörper und/oder an dem eingelegten Spulendraht (20) stoffschlüssig fixiert wird.

5. Verfahren nach Anspruch 4,
wobei zur Herstellung einer stoffschlüssigen Verbindung oder Fixierung ein Fixierungsmittel auf das Isolierpapier wenigstens an den zu verbindenden Abschnitten aufgebracht wird.

6. Verfahren nach Anspruch 5,
wobei das Isolierpapier (30) wenigstens teilweise mit dem Fixierungsmittel beschichtet wird und wobei das Fixierungsmittel bevorzugt Klebstoff, Träufelharz oder Backlack umfasst.

7. Verfahren nach einem der Ansprüche 1 bis 6,
wobei die vorstehenden Abschnitte (32) der Isolierpapier-Schenkel um wenigstens 1,5 mm, vorzugsweise um 2 mm bis 5 mm, vorstehen.

8. Verfahren nach einem der Ansprüche 1 bis 7,
wobei in einem weiteren Schritt auf wenigstens einen Endabschnitt des Spulendrahtes (20) ein Isolierelement (24) aufgebracht wird, beispielsweise ein hülsen- oder schlauchförmiges Isolierelement (24), welches in einem weiteren Verfahrensschritt fixiert werden kann.

9. Verfahren nach einem der Ansprüche 1 bis 8,
wobei in einem weiteren Schritt die Statorsegmente (12) miteinander verbunden werden, wobei optional die Statorsegmente (12) mit einem zusätzlichen Verbindungsmittel stoffschlüssig miteinander verbunden werden, und wobei das zusätzliche Verbindungsmittel Klebstoff, Träufelharz oder Backlack umfassen kann.

10. Vorrichtung zur Herstellung eines Stators (10) mit dem Verfahren gemäß einem der Ansprüche 1 bis 9, umfassend:
eine Vorrichtung zum Einlegen von Isolierpapier (30) in den Spulenraum, wobei beim Einlegen des Isolierpapiers (30) sichergestellt ist, dass das Isolierpapier (30) im eingelegten Zustand zwei gegenüberliegende Schenkel (30a, 30b) aufweist, von denen jeder aus der jeweiligen Spulennut (14) heraus in einer Richtung senkrecht zu der Längsachse (L) des Stators (10) über das jeweilige Statorsegment (12) vorsteht, und
eine Vorrichtung zum teilweise Verbinden der Isolierpapier-Schenkel wenigstens im Bereich ihrer vorstehenden Abschnitte (32),
wobei die Vorrichtung zum Verbinden zwei stempelförmige Anlageabschnitte aufweist, die zum Herstellen einer Verbindung erhitzt werden können und relativ zueinander bewegbar sind.

11. Vorrichtung nach Anspruch 10,
wobei die stempelförmigen Anlageabschnitte über eine Steueranordnung ansteuerbar sind und abhängig von der Ansteuerung unterschiedlich große Bewegungshübe relativ zueinander durchführen können.

## Claims

1. A method of inserting wire (20) in the form of at least one coil (20a) into a coil space of a stator segment (12), the coil space comprising a number of coil grooves (14), comprising the following steps:
- inserting insulating paper (30) into the coil space in such a way that the insulating paper (30) in the inserted state has two opposite legs (30a, 30b), each of the legs projecting at least in sections out of the respective coil groove (14) in a direction perpendicular to a longitudinal axis (L) of the stator segment (12) beyond the respective stator segment (12),
- inserting the coil wire (20) into the coil space, and
- joining the two insulating paper legs of an insulating paper inserted in a coil groove by means of a joining device, wherein these two insulating paper legs are joined to each other at least partially and at least in the region of the respective projecting portions (32), and wherein the joining device comprises two stamp-shaped abutment portions which can be heated to produce a joint and are movable relative to each other.

2. The method according to claim 1,
wherein the insulating paper legs (30a, 30b) are connected to each other in a puncti-form or planar manner and wherein the area in which the insulating paper legs are connected to each other extends substantially in the direction of the longitudinal axis over preferably 1 to 4 mm.

3. The method according to one of claims 1 or 2,
wherein the insulating paper legs are joined to each other in a materially bonded manner.

4. The method according to any one of claims 1 to 3,
wherein the insulating paper (30) is fixed in a materially bonded manner at least in sections to the stator body and/or to the inserted coil wire (20).

5. The method according to claim 4,
wherein a fixing agent is applied to the insulating paper at least at the sections to be connected in order to produce a materially bonded connection or fixing.

6. The method according to claim 5,
wherein the insulating paper (30) is at least partially coated with the fixing agent and wherein the fixing agent preferably comprises adhesive, drizzle resin or baking varnish.

7. The method according to any one of claims 1 to 6,
wherein the protruding portions (32) of the insulating paper legs protrude by at least 1.5 mm, preferably by 2 mm to 5 mm.

8. The method according to any one of claims 1 to 7,
wherein in a further step an insulating element (24) is applied to at least one end portion of the coil wire (20), for example a sleeve- or tube-shaped insulating element (24), which can be fixed in a further step.

9. The method according to any one of claims 1 to 8,
wherein in a further step the stator segments (12) are joined together, wherein optionally the stator segments (12) are joined together with an additional joining means, and wherein the additional joining means may comprise adhesive, drizzle resin or baking lacquer.

10. An apparatus for manufacturing a stator (10) by the method according to any one of claims 1 to 9, comprising:
an apparatus for inserting insulating paper (30) into the bobbin space, wherein during insertion of the insulating paper (30) it is ensured that the insulating paper (30) in the inserted state has two opposite legs (30a, 30b), each of which protrudes out of the respective bobbin groove (14) in a direction perpendicular to the longitudinal axis (L) of the stator (10) over the respective stator segment (12); and
a device for partially joining the insulating paper legs at least in the region of their projecting portions (32),
wherein the device for joining comprises two stamp-shaped abutment portions which can be heated to form a joint and are movable relative to each other.

11. The apparatus according to claim 10,
wherein the plunger-shaped contact sections can be controlled via a control arrangement and can perform movement strokes of different magnitude relative to one another depending on the control.

## Revendications

1. Procédé d'insertion de fil (20) sous la forme d'au moins une bobine (20a) dans un espace de bobine d'un segment de stator (12), l'espace de bobine comprenant un certain nombre de rainures de bobine (14), comprenant les étapes suivantes :
- l'insertion de papier isolant (30) dans l'espace de bobine de telle sorte que le papier isolant (30) présente, à l'état inséré, deux branches opposées (30a, 30b), chacune des branches dépassant, au moins par sections, de la rainure de bobine respective (14) dans une direction perpendiculaire à un axe longitudinal (L) du segment de stator (12) au-dessus du segment de stator respectif (12),
- l'insertion du fil de la bobine (20) dans l'espace de la bobine, et
- relier les deux branches de papier isolant d'un papier isolant inséré dans une rainure de bobine au moyen d'un dispositif de liaison, ces deux branches de papier isolant étant reliées entre elles au moins partiellement et au moins dans la zone des tronçons (32) respectifs en saillie, et le dispositif de liaison comportant deux tronçons d'appui en forme de poinçon, qui peuvent être chauffés pour réaliser une liaison et qui sont mobiles l'un par rapport à l'autre.

2. Procédé selon la revendication 1,
dans lequel les branches de papier isolant (30a, 30b) sont reliées entre elles par points ou en surface, et dans lequel la zone dans laquelle les branches de papier isolant sont reliées entre elles s'étend sensiblement dans la direction de l'axe longitudinal, de préférence sur 1 à 4 mm.

3. Procédé selon l'une des revendications 1 ou 2,
dans lequel les branches du papier isolant sont reliées entre elles par liaison de matière.

4. Procédé selon l'une des revendications 1 à 3,
dans lequel le papier isolant (30) est fixé par liaison de matière au moins par sections sur le corps du stator et/ou sur le fil de bobine (20) inséré.

5. Procédé selon la revendication 4,
un agent de fixation étant appliqué sur le papier isolant au moins sur les sections à relier pour réaliser une liaison par matière ou une fixation.

6. Procédé selon la revendication 5,
dans lequel le papier isolant (30) est au moins partiellement revêtu de l'agent de fixation et dans lequel l'agent de fixation comprend de préférence de la colle, de la résine d'imprégnation ou du vernis à cuire.

7. Procédé selon l'une quelconque des revendications 1 à 6,
dans lequel les parties en saillie (32) des branches du papier isolant font saillie d'au moins 1,5 mm, de préférence de 2 mm à 5 mm.

8. Procédé selon l'une quelconque des revendications 1 à 7,
dans lequel, au cours d'une étape supplémentaire, un élément isolant (24) est appliqué sur au moins une partie d'extrémité du fil de bobinage (20), par exemple un élément isolant (24) en forme de manchon ou de tuyau, qui peut être fixé au cours d'une étape supplémentaire du procédé.

9. Procédé selon l'une des revendications 1 à 8,
dans lequel, au cours d'une étape supplémentaire, les segments de stator (12) sont reliés entre eux, les segments de stator (12) étant éventuellement reliés entre eux par liaison de matière à l'aide d'un moyen de liaison supplémentaire, et le moyen de liaison supplémentaire pouvant comprendre de la colle, de la résine d'imprégnation ou de la laque thermofusible.

10. Dispositif pour la fabrication d'un stator (10) avec le procédé selon l'une des revendications 1 à 9, comprenant :
un dispositif de mise en place de papier isolant (30) dans l'espace de bobinage, dans lequel, lors de la mise en place du papier isolant (30), il est assuré que le papier isolant (30) présente, à l'état mis en place, deux branches opposées (30a, 30b), dont chacune fait saillie hors de la rainure de bobinage respective (14) dans une direction perpendiculaire à l'axe longitudinal (L) du stator (10), au-dessus du segment de stator respectif (12), et
un dispositif pour relier partiellement les branches de papier isolant au moins dans la zone de leurs parties saillantes (32),
le dispositif d'assemblage comprenant deux parties d'appui en forme de poinçon qui peuvent être chauffées pour réaliser un assemblage et qui sont mobiles l'une par rapport à l'autre.

11. Dispositif selon la revendication 10,
dans lequel les sections d'appui en forme de poinçon peuvent être commandées par l'intermédiaire d'un dispositif de commande et peuvent effectuer des courses de déplacement de différentes tailles l'une par rapport à l'autre en fonction de la commande.
